# DEMANDE DE BREVET EUROPEEN

(11) **EP 0 951 931 A1**
(43) Date de publication de la demande: **27.10.1999**
(21) Numéro de dépôt: 99410037.8
(22) Date de dépôt: 23.04.1999
(51) Int. Cl.: B01D 39/20, B01D 46/24, B01D 53/94

(54) **Filtre à particules pour gaz**

(30) Priorité: 24.04.1998 FR 9805428
(71) Demandeur: Federal Mogul Sintered Products, 38113 Veurey-Voroize (FR)
(72) Inventeur: Gueydan, Henri, 38430 Moirans (FR)
(74) Mandataire: de Beaumont, Michel

(57) **Abrégé**

L'invention concerne un filtre à particules pour gaz, comprenant une paroi (10) constituée de grains de métal frittés. La paroi est revêtue du côté du gaz entrant d'un feutre (16) constitué de fibres métalliques.

## Description

La présente invention concerne un filtre à particules pour gaz, notamment des particules de suie produites par les gaz d'échappement de moteurs thermiques.

Un facteur de pollution important des moteurs thermiques, en particulier les moteurs Diesel, est leur émission de particules, notamment de suie. Ce sont les particules les plus fines qui sont les plus nuisibles.

Pour supprimer les émissions de particules de suie, on pourrait envisager d'équiper les pots d'échappement des moteurs de filtres à particules.

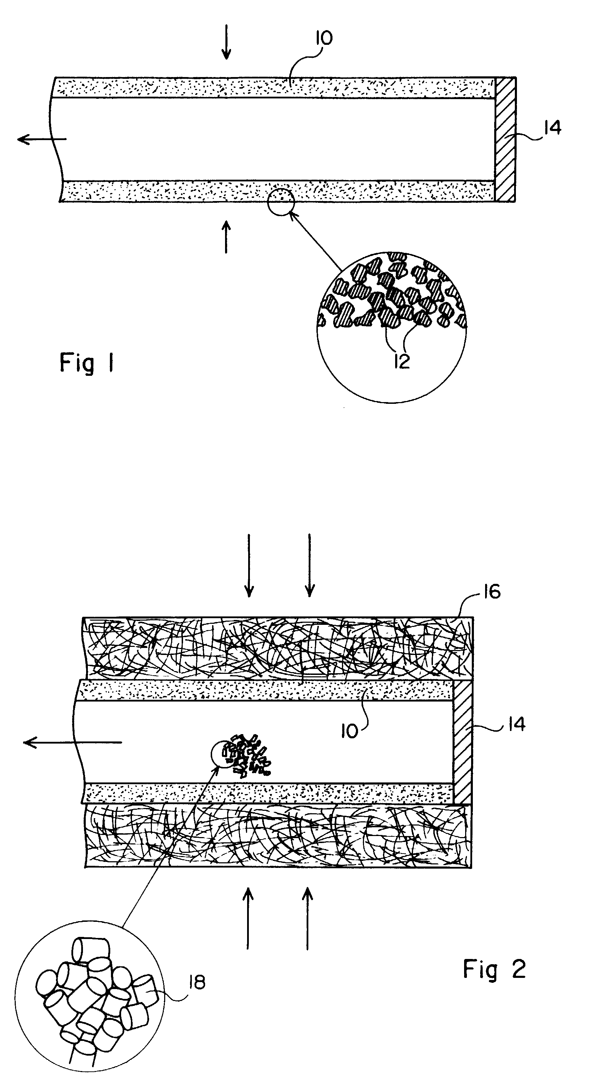

La figure 1 représente schématiquement un filtre à particules classique utilisé dans l'industrie chimique. Ce filtre comprend un tube 10 réalisé à partir de grains métalliques 12. Ces grains ont été frittés afin de les solidariser les uns des autres et d'assurer la cohérence du tube 10. La porosité du tube est assurée par les interstices entre les grains. Une des extrémités du tube 10 est généralement obturée par un bouchon soudé 14.

Dans une utilisation normale, le fluide à filtrer est, comme cela est représenté par des flèches, forcé à pénétrer dans le tube 10 de l'extérieur et récupéré filtré à l'extrémité non obturée du tube 10.

La demanderesse fabrique de tels filtres dans différentes classes, sous la dénomination "PORAL". Un filtre de classe 3 arrête 98 % des particules de 0,2 µm de diamètre dans un écoulement gazeux. Un filtre de classe 3, en acier inoxydable, conviendrait particulièrement bien pour arrêter les particules de suie émises par un moteur thermique. En effet, il arrêterait les particules les plus fines.

On s'est toutefois aperçu qu'un tel filtre était colmaté très rapidement lorsqu'il était utilisé dans un pot d'échappement d'un moteur tournant à son régime nominal. Il n'est donc pas concevable d'utiliser ce filtre dans des véhicules automobiles.

Un objet de la présente invention est de prévoir un filtre à particules pour gaz, notamment pour gaz d'échappement, ayant une durée d'utilisation avant colmatage particulièrement élevée tout en arrêtant les particules les plus fines.

Cet objet est atteint grâce à un filtre à particules pour gaz, comprenant une paroi constituée de grains de métal frittés. La paroi est revêtue du côté du gaz entrant d'un feutre constitué de fibres métalliques.

Selon un mode de réalisation de la présente invention, les fibres métalliques du feutre sont également frittées.

Selon un mode de réalisation de la présente invention, ladite paroi est tubulaire, le feutre étant disposé du côté extérieur de la paroi.

Selon un mode de réalisation de la présente invention, l'espace délimité par la paroi tubulaire est rempli de grains revêtus d'un métal catalyseur de combustion.

Selon un mode de réalisation de la présente invention, les grains revêtus sont frittés.

Selon un mode de réalisation de la présente invention, les grains revêtus sont en alumine, le métal de revêtement étant le platine.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, illustre un filtre à particules classique réalisé en grains métalliques frittés ;
la figure 2 représente un mode de réalisation de filtre à particules selon la présente invention ; et
les figures 3A et 3B représentent des vues schématiques en coupe de côté et de dessus d'un dispositif de filtrage de particules, à insérer dans une tubulure d'échappement d'un moteur.

En figure 2, un filtre à particules selon l'invention comprend un tube de filtrage classique 10 réalisé en grains métalliques frittés, ce tube étant obturé à une extrémité par un bouchon soudé 14. Ce tube de filtrage doit pouvoir arrêter les particules les plus fines et résister à des températures élevées. Il s'agit, par exemple, d'un filtre PORAL de classe 3 en acier inoxydable.

Comme on l'a précédemment indiqué, si on utilise un tel tube de filtrage pour les gaz d'échappement d'un moteur thermique, il serait colmaté très rapidement.

Pour éviter le colmatage rapide du tube de filtrage 10, on prévoit selon la présente invention d'entourer le tube 10 d'un feutre 16 en fibres d'acier inoxydable, servant de réservoir à particules.

L'invention tire profit du fait qu'un filtre constitué d'un feutre a un pouvoir de filtrage aléatoire, c'est-à-dire que, selon le trajet des particules à l'intérieur du feutre, elles sont arrêtées plus ou moins tôt en rencontrant une zone d'intersection de plusieurs fibres. Même si une particule est arrêtée, il reste autour de celle-ci suffisamment d'espace libre pour permettre à d'autres particules de circuler, c'est-à-dire que la particule arrêtée ne crée pas une obstruction comme elle le ferait plus facilement dans un filtre réalisé à partir de grains. Plus les particules de suie sont grosses, plus elles ont de chances d'être arrêtées tôt dans leur parcours à travers le feutre, et seules les particules les plus fines atteindront le filtre tubulaire 10 pour être arrêtées par celui-ci.

En fait, le feutre est capable de stocker beaucoup plus de particules dans toute son épaisseur que le filtre tubulaire 10 qui arrête pratiquement toutes les particules sur sa surface. Ainsi, la capacité de stockage du feutre est infiniment plus grande que la capacité de stockage du filtre tubulaire. La plupart des particules étant arrêtées par le feutre et seule une très faible proportion de particules très fines atteignant la surface du filtre tubulaire 10, la durée de colmatage du filtre selon l'invention est nettement plus élevée que celle du filtre tubulaire 10 seul.

On peut ainsi atteindre, en choisissant la porosité et l'épaisseur du feutre 16, des durées de colmatage (de l'ordre du millier d'heures) correspondant, en régime nominal, à la durée de vie d'un pot d'échappement de véhicule automobile. Il n'est pas exclu de rendre le filtre démontable afin de pouvoir le nettoyer au cours d'entretiens périodiques.

Bien entendu, le filtre tubulaire 10, arrêtant les particules les plus fines, est indispensable, puisque ce sont les particules les plus fines qui sont les plus nuisibles.

Tout comme le filtre tubulaire 10, le feutre 16 doit pouvoir supporter des températures élevées. Pour cela, il est de préférence constitué de fibres en acier inoxydable. De tels feutres sont commercialisés par la société chinoise NORTHWEST INSTITUTE FOR NON FERROUS METAL RESEARCH (NIN) sous la dénomination NINFIL ST. Pour assurer la cohérence du feutre, les fibres sont frittées.

Pour assurer la cohérence d'un filtre selon l'invention, l'ensemble du filtre est de préférence également fritté, ce qui provoquera une adhésion des fibres internes du feutre 16 sur la surface externe du tube 10.

Les véhicules automobiles sont souvent équipés de pots catalytiques auxquels viendront s'ajouter les filtres à particules selon l'invention.

Un filtre selon l'invention pourra avantageusement jouer le rôle de pot catalytique. Pour cela, comme cela est représenté, l'espace intérieur du tube 10 est rempli d'éléments catalyseurs 18. Il est hors de question d'utiliser pour ces éléments un matériau catalyseur pur, tel que le platine, car ce matériau est lourd et particulièrement coûteux. Les éléments 18 sont sous la forme de grains en un matériau léger et résistant aux températures élevées, revêtus de platine. Ces grains devront être relativement gros afin de faciliter l'opération de revêtement et réduire les pertes de charge dans l'écoulement du gaz à l'intérieur du tube 10. Comme cela est représenté, les éléments 18 pourront être des plots cylindriques en alumine revêtus de platine. La société ENGELARD-CLAL commercialise de tels plots ayant un diamètre et une hauteur d'environ 3 mn.

Lorsqu'on remplit le tube 10 des plots 18, ces plots se positionnent aléatoirement les uns par rapport aux autres de manière à fournir de nombreux chemins tortueux au gaz d'échappement.

Toutefois, les vibrations résultant de l'utilisation normale du véhicule risquent d'entraîner un tassement des éléments 18 de sorte à libérer, à la partie supérieure du tube 10, un espace dépourvu des éléments catalytiques, ce qui n'est pas souhaitable.

Pour éviter cela, après remplissage du tube 10 par les éléments 18, on passe l'ensemble du filtre dans un four de frittage, ce qui provoque la solidarisation des éléments 18 les uns aux autres par l'intermédiaire du platine qui les revêt. L'opération de frittage des éléments 18 et du feutre 16 sur le tube 10 pourra être réalisée en même temps qu'un recuit de stabilisation des diverses soudures nécessaires, notamment du bouchon 14 sur le tube 10.

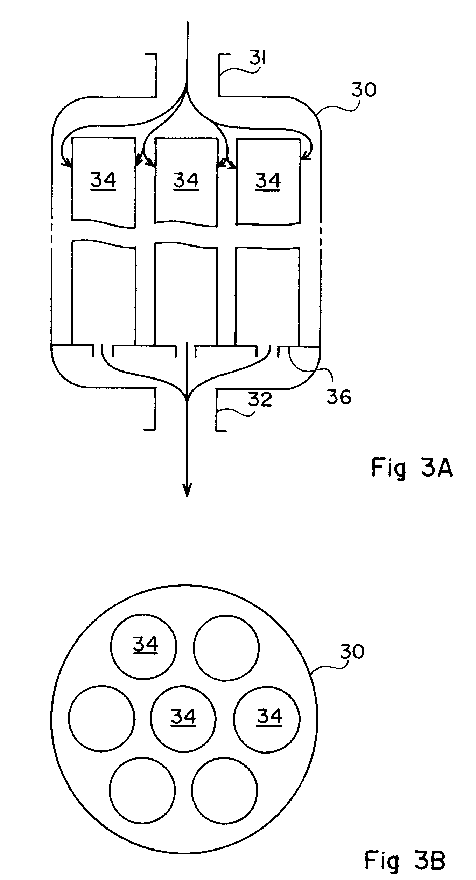

Les figures 3A et 3B représentent des vues en coupe de côté et de dessus d'un exemple de dispositif de filtrage selon l'invention, à incorporer dans un pot d'échappement. Le dispositif comprend un boîtier de forme générale cylindrique 30 dont les extrémités sont munies respectivement d'une tubulure d'admission 31 et d'une tubulure de sortie 32. Plusieurs filtres 34 selon l'invention sont disposés régulièrement dans l'axe du boîtier 30. Ils sont suffisamment espacés les uns des autres pour permettre au gaz de pénétrer latéralement dans les filtres 34. Les filtres 34 sont fixés du côté de la tubulure d'admission 31, par leurs extrémités ouvertes, sur une plaque radiale 36 disposée à proximité de la tubulure de sortie 32.

La présente invention est susceptible de nombreuses variantes et modifications qui apparaîtront à l'homme du métier. Par exemple, bien que l'on ait décrit un filtre tubulaire offrant une importante surface de filtrage, le filtre pourrait également être plat, le feutre étant disposé du côté de l'écoulement de gaz entrant.

## Revendications

1. Filtre à particules pour gaz, comprenant une paroi (10) constituée de grains de métal frittés, propre à arrêter les particules les plus fines parmi les particules à filtrer, la paroi étant revêtue du côté du gaz entrant d'un feutre (16) de fibres métalliques, propre à arrêter dans son épaisseur les particules plus grandes.

2. Filtre à particules selon la revendication 1, caractérisé en ce que les fibres métalliques du feutre (16) sont également frittées.

3. Filtre à particules selon la revendication 1, caractérisé en ce que ladite paroi (10) est tubulaire, le feutre (16) étant disposé du côté extérieur de la paroi.

4. Filtre à particules selon la revendication 3, caractérisé en ce que l'espace délimité par la paroi tubulaire (10) est rempli de grains (18) revêtus d'un métal catalyseur de combustion.

5. Filtre à particules selon la revendication 4, caractérisé en ce que les grains revêtus sont frittés.

6. Filtre à particules selon la revendication 3 ou 4, caractérisé en ce que les grains revêtus sont en alumine, le métal de revêtement étant le platine.
